# EUROPÄISCHE PATENTSCHRIFT

(11) **EP 2 513 175 B1**
(45) Veröffentlichungstag und Bekanntmachung des Hinweises auf die Patenterteilung: **12.10.2016**
(21) Anmeldenummer: 10782611.7
(22) Anmeldetag: 25.11.2010
(51) Int. Cl.: C08F 265/04

(54) **VERFAHREN ZUR HERSTELLUNG VON POLY(METH )ACRYLAT-PFROPF-POLYLACTON-POLYMEREN**
METHOD FOR PRODUCING POLY(METHYL) ACRYLATE GRAFT POLYLACTONE POLYMERS
PROCÉDÉ DE PRÉPARATION DE POLYMÈRES DE POLYLACTONE GREFFÉS SUR DU POLY(MÉTH)ACRYLATE

(30) Priorität: 18.12.2009 DE 102009055009
(43) Veröffentlichungstag der Anmeldung: 24.10.2012
(73) Patentinhaber: Evonik Degussa GmbH, 45128 Essen (DE)
(72) Erfinder: BRAND, Thorsten, 45772 Marl (DE); BRENNER, Gabriele, 48249 Dülmen (DE); BORGMANN, Cornelia, 07928 Chatham, NJ (US); KOSCHABEK, Rene, 69469 Weinheim (DE); BALK, Sven, 60594 Frankfurt (DE)
(86) Internationale Anmeldenummer: PCT/EP2010/068202
(87) Internationale Veröffentlichungsnummer: WO 2011/073006

(56) Entgegenhaltungen:
- EP-A2- 0 281 095
- EP-A2- 1 464 674
- US-A1- 2003 149 227
- US-A1- 2007 142 507

## Beschreibung

Die vorliegende Erfindung betrifft ein Verfahren zur Herstellung von Poly(meth-)acrylat-pfropf-polylacton-Polyolen. Die erfindungsgemäßen Polymerarchitekturen besitzen ein Poly(meth-)acrylatrückgrat mit Polylactonseitenketten. Der Aufbau der Seitenketten erfolgt durch ringöffnende Polymerisation von Lactonen unter Pfropfung auf im Poly(meth-)acrylatrückgrat vorhandene, nukleophile Gruppen. Bei dem erfindungsgemäßen Verfahren läuft die Pfropfungsreaktion in einem derart hohen Maße ab, dass das als Ausgangsstoff eingesetzte Poly(meth-)acrylat vollständig mit Lacton umgesetzt ist. Das Verfahren zeichnet sich dadurch aus, dass kein separater Reinigungsschritt zur Entfernung von nicht umgesetztem Lacton erforderlich ist.

Die Synthese von Polymerarchitekturen, die auf einer Kombination von Polyestern und Poly(meth-)acrylaten basieren, ist schon seit Mitte der 1960er Jahre Thema der industriellen Forschung. Die potentiellen Anwendungen solcher Materialien umfassen dabei z.B. Dispergiermittel (siehe z. B. EP 1 555 174), Imprägniermittel (GB 1,007,723), Bindemittel für Beschichtungen (z.B. beschrieben in DE 2 006 630, JP 09 216 921 oder DE 4 345 086) oder für Klebemassen (z. B. in DE 2 006 630). Die Möglichkeiten der gezielten Kombination von Poly(meth-)acrylaten und Polyestern sind vielfältig. So sind Systeme aus Polyester-Hauptketten und (Meth-)Acrylat-Seitenketten aus DE 44 27 227 bekannt.

Die ringöffnende Polymerisation von Lactonen zu Polyestern ist Stand der Technik und ist beispielsweise in Macromolecules 2002, 35, 1504 - 1512 und Macromol. Chem. Phys. 2001, 202, 2963 -2970 beschrieben.

Zur Herstellung von Polymerarchitekturen, die eine Poly(meth-)acrylat-hauptkette und Polyesterseitenketten besitzen, können verschiedene Wege beschritten werden (zum Beispiel in US 2007/142507).

EP 1227113 beschreibt die ringöffnende Polymerisation von ε-caprolacton durch hydroxylfunktionelle monomere Acrylatverbindungen z. B. Hydroxyethylacrylat. Die Produkte dieser Reaktion können dann mit anderen ungesättigten Verbindungen z. B. radikalisch copolymerisiert werden. Allerdings kann diese Methode nur mit einer kleinen Menge ε-caprolacton durchgeführt werden.

In ähnlicher Weise offenbart EP 1 464 674 die Herstellung kammartiger Polymere mit Poly(meth-)acrylat-Hauptkette und Polyesterseitenketten durch die radikalische Polymerisation von ε-Caprolacton-modifizierten Vinyl-Monomeren. Hierbei handelt es sich um ε-Caprolacton-Oligomere, die durch ringöffnende Oligomerisation mittels Hydroxy(meth-)acrylaten wie z. B. Hydroxybutyl(meth-)acrylat erhalten werden können. Die ε-Caprolacton-modifizierten Vinyl-Monomere werden z. B. von *Daicel Chemical Industries* unter dem Markennamen *Placcel F* kommerziell vertrieben. Diese Methode ist aufwendig und damit kostenintensiv. Die Reinigung der Makromonomere ist sehr aufwendig. Auch zeigt sich, dass entsprechende Makromonomere nur sehr beschränkt mit einer maximalen Anzahl von 10 Caprolactonwiederholungseinheiten verfügbar sind.

Eine weitere Methode (z. B. in JP 06206974) ist es, zunächst ε-caprolacton zum Homopolymerisat umzusetzen und dann mittels eines Di- bzw. Polyisocyanates an ein Polyacrylatpolyol zu koppeln. Auf diese Weise können definierte Produkte erhalten werden mit niedrigem Homopolymerisatanteil. Nachteil dieses Verfahren ist der hohe verfahrenstechnische Aufwand, der durch die separate Herstellung der einzelnen Polymerblöcke und die anschließende Koppelung dieser mittels einer Isocyanatkomponente entsteht. Des Weiteren gestaltet sich die Handhabung von Isocyanaten unter toxikologischen Gesichtspunkten als problematisch.

EP 281 095 beschreibt die simultane Haupt- und Seitenketten-Polymerisation. Dabei werden Acrylatmonomere genutzt, die nukleophile Funktionalitäten besitzen, und die, während der Aufbau der Hauptkette propagiert, durch Ringöffnung von Lactonen einen Seitenkettenaufbau initiieren.

Hierbei handelt es sich jedoch um ein unkontrolliertes Verfahren, das zu Produktmischungen mit einer Vielzahl verschiedenster Komponenten wie z. B. reinen Acrylatpolymerisaten führt. Für den Fachmann ergibt sich daraus zwangsläufig, dass, unter den Bedingungen einer ionischen Lactonpolymerisation, die in situ durchgeführte freie radikalische Polymerisation zu Nebenreaktionen wie einer Teilgelierung der Produkte führen muss. Solche Vernetzungen sind jedoch selbst im Falle eines nur geringen Auftretens für die Produktaufarbeitung von großem Nachteil. Des Weiteren arbeitet das beschriebene Verfahren in organischen Lösemitteln, was - je nach Weiterverwendung des erhaltenen Polymers - einen Zusatzaufwand für deren Entfernung bedeuten kann.

Ziel der vorliegenden Erfindung ist dagegen die gezielte Synthese von ungelierten Pfropfcopolymeren, die neben einer definierten (Meth-)acrylat-hauptkette Polylactonseitenketten besitzen.

Überraschenderweise wurde gefunden, dass man durch ringöffnende Polymerisation von Lactonen auf nukleophile Gruppen tragende Poly(meth-)acrylate Polyhydroxylarchitekturen mit Polylacton-Seitenketten und Poly(meth-)acrylat-Hauptkette erhalten kann.

Demgemäß ist ein erster Gegenstand der vorliegenden Erfindung ein Verfahren zur Herstellung von Poly(meth-)acrylat-pfropf-polylacton-Polymeren umfassend die ringöffnende Polymerisation von Lactonen auf Poly(meth-)-acrylate, wobei die Poly(meth-)acrylate nukleophile Gruppen aufweisen, bei Temperaturen ≥160 °C und Drücken ≤ 10 mbar unter Zusatz eines Katalysators.

Das erfindungsgemäße Verfahren hat den Vorteil, dass es einfach durchzuführen ist und dass bei der Durchführung des Verfahrens keine Gelierung oder ungewollte Vernetzung eintritt. Das Verfahren zeichnet sich dadurch aus, dass kein separater Reinigungsschritt zur Entfernung von nicht umgesetztem Lacton erforderlich ist.

Die Formulierung Poly(meth-)acrylat beschreibt sowohl Polyacrylate als auch Polymethacrylate oder Copolymere aus Acrylaten und Methacrylaten.

Die Poly(meth-)acrylat-Hauptkette basiert auf Monomeren bzw. Monomermischungen, wobei die Monomere bzw. Monomermischungen insbesondere Monomere mit nukeophilen Gruppen umfassen. Entsprechende Monomere können aus der Gruppe der Methacrylate bzw. Acrylate ausgewählt sein. Bevorzugt sind die nukleophilen Gruppen ausgewählt aus der Gruppe umfassend Hydroxylgruppen, Aminogruppen und/oder Mercaptogruppen. Insbesondere bevorzugt handelt es sich bei den nukleophilen Gruppen um Hydroxylgruppen.

Besonders bevorzugt werden die nukleophilen Gruppen durch Copolymerisation von OH-Gruppen aufweisenden Monomeren in das erfindungsgemäß verwendete Poly(meth-)acrylat eingebracht. Insbesondere bevorzugt sind OH-funktionalisierte Acrylate bzw. Methacrylate. Als bevorzugtes Beispiel seien Hydroxyethylmethacrylat, Hydroxyethylacrylat, Hydroxypropylmethacrylat, Hydroxypropylacrylat, 2,3-Dihydroxypropylacrylat und 2,3-Dihydroxypropylmethacrylat aufgeführt.

Der Gehalt an Monomeren mit nukleophilen Gruppen im erfindungsgemäßen Poly(meth-)acrylatrückgrat liegt im Bereich von 0,1 % und 10 Gew.-%, bevorzugt zwischen 0,1 % und 5,0 Gew.-%, besonders bevorzugt zwischen 1,0 % bis 2,5 Gew.-%, bezogen auf die Gesamtmenge an Monomeren für die Synthese des Poly(meth-)acrylatrückgrats.

Die verwendeten Poly(meth-)acrylat Präpolymere weisen bevorzugt eine OH-Zahl zwischen 5 mg KOH/g und 40 mg KOH/g, besonders bevorzugt zwischen 10 mg KOH/g und 35 mg KOH/g und insbesondere bevorzugt zwischen 15 mg KOH/g und 30 mg KOH/g auf. Die Hydroxylzahl (OH-Zahl) wird bestimmt nach DIN 53240-2.

Zusätzlich zu den nukleophile Gruppen tragenden Bausteinen setzen sich die erfindungsgemäß verwendeten Poly(meth-)acrylate aus Monomeren, die ausgewählt sind aus der Gruppe der (Meth-)Acrylate wie beispielsweise Alkyl(meth-)acrylate von gradkettigen, verzweigten oder cycloaliphatischen Alkoholen mit 1 bis 40 C-Atomen, wie zum Beispiel Methyl(meth-)acrylat, Ethyl(meth-)acrylat, n-Butyl(meth-)acrylat, i-Butyl(meth-)acrylat, t-Butyl-(meth-)acrylat, Pentyl(meth-)acrylat, 2-Ethylhexyl(meth-)acrylat, Stearyl-(meth-)acrylat, Lauryl(meth-)acrylat, Cyclohexyl(meth-)acrylat, Isobornyl-(meth-)acrylat; Aryl(meth-)acrylate wie zum Beispiel Benzyl(meth-)acrylat oder Phenyl(meth-)acrylat die jeweils unsubstituiert oder 1-4-fach substituierte Arylreste aufweisen können; andere aromatisch substituierte (Meth-)Acrylate wie beispielsweise Naphthyl(meth-)acrylat; Mono(meth-)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyl-oxymethylmethacrylat, Benzyloxymethylmethacrylat, Furfurylmethacrylat, 2-Butoxyethylmethacrylat, 2-Ethoxyethylmethacrylat, Allyloxymethyl-methacrylat, 1-Ethoxybutylmethacrylat, 1-Ethoxyethylmethacrylat, Ethoxy-methylmethacrylat, Poly(ethylenglycol)methylether(meth-)acrylat und Poly(propylenglycol)-methylether(meth-)acrylat, zusammen.

Neben den zuvor dargelegten (Meth-)Acrylaten können die zu polymerisierenden Zusammensetzungen auch weitere ungesättigte Monomere aufweisen, die mit den zuvor genannten (Meth-)Acrylaten und mittels radikalischer Polymerisation copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z. B. Vinylacetat, Styrol, substituierte Styrole mit einem Alkylsubstituenten an der Vinylgruppe, wie z. B. α-Methylstyrol und α-Ethylstyrol, substituierte Styrole mit einem oder mehreren Alkylsubstituenten am Ring wie Vinyltoluol und p-Methylstyrol, halogenierte Styrole wie beispielsweise Monochlorstyrole, Dichlorstyrole, Tribromstyrole und Tetrabromstyrole; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinyloxolan, Vinylfuran, Vinylthiophen, Vinylthiolan, Vinylthiazole, Vinyloxazole und Isoprenylether; Säuren und Säurederivate wie beispielsweise (Meth-)Acrylsäure, Maleinsäureanhydrid, Maleinimid, Methylmaleinimid und Diene wie z. B. Divinylbenzol. Ferner können die vorab genannten Monomere ebenfalls eine Hydroxy- und/oder Amino- und/oder Mercaptofunktionalität in einem Substituenten aufweisen. Solche Monomere sind beispielsweise Vinylpiperidin, 1-Vinylimidazol, N-Vinylpyrrolidon, 2-Vinylpirrolidon, N-Vinylpirrolidin, 3-Vinylpyrrolidin, N-Vinylcaprolactam, N-Vinylbutyrolactam, hydrierte Vinyl-thiazole und hydrierte Vinyloxazole. Besonders bevorzugt werden Vinylester, Vinylether, Fumarate, Maleate, Styrole oder Acrylonitrile eingesetzt.

Die erfindungsgemäßen Poly(meth-)acrylat Präpolymere weisen bevorzugt ein Molekulargewicht M_{w} zwischen 1 000 und 200 000 g/mol auf. Besonders bevorzugt ist ein Molekulargewicht M_{w} zwischen 5 000 und 100 000 g/mol und ganz besonders bevorzugt ist ein Molekulargewicht M_{w} zwischen 10 000 und 50 000 g/mol.

Das Gewichtsmittel des Molekulargewichts M_{w} wird mittels Gelpermeationschromatographie mit RI-Detektion nach DIN 55672-1 mit Tetrahydrofuran als Eluent gegen Polystyrol- Standard bestimmt.

Im Einzelnen wird das Poly(meth-)acrylat Präpolymere nach Anteil und Zusammensetzung zweckmäßigerweise im Hinblick auf die gewünschte technische Funktion gewählt werden.

Die erfindungsgemäß verwendeten Poly(meth-)acrylat Präpolymere können mittels Substanz-, Emulsions-, Suspensions-, Mini- bzw. Mikrosuspensions- oder Lösungspolymerisation hergestellt werden. Bei dem eingesetzten Polymerisationsverfahren kann es sich um eine freiradikalische oder kontrolliert radikalische Polymerisation handeln. Beispiele für kontrolliert radikalische Polymerisationsverfahren sind die "Nitroxide mediated polymerziation" (NMP) und die "reversible addition-fragmentation chain transfer" (RAFT) Polymerisation.

Die zu verwendenden Radikalinitiatoren hängen von der gewählten Polymerisationsmethode bzw. Polymerisationstechnik ab. Die jeweils zu verwendenden Initiatoren sind dem Fachmann bekannt bzw. sind in der dem Fachmann allgemein bekannten Polymerliteratur beschrieben. Als Beispiel finden in der freiradikalischen Lösungs- oder Suspensionspolymerisation in der Regel Azoverbindungen wie AIBN oder Perester wie tert.-Butylperoctoat oder Laurylperoxid als Radikalinitiator Verwendung.

Gegebenenfalls können zur Einstellung des gewünschten Molekulargewichts des Poly(meth-)acrylat Präpolymeren noch Regler mit verwendet werden. Als Regler eignen sich z. B. Schwefelregler, insbesondere mercaptogruppenhaltige Regler, z. B. Dodecylmercaptan. Die Konzentrationen an Reglern liegen im Allgemeinen bei 0,1 Gew.-% bis 2,0 Gew.-%, bezogen auf das Gesamtpolymerisat.

Die erfindungsgemäßen Poly(meth-)acrylat-pfropf-polylacton-Polymere können mittels etablierter Techniken für Polymerisationsreaktionen hergestellt werden. Die Herstellung kann in Lösung oder in der Schmelze durch die ringöffnende Polymerisation der Lactone auf die nukleophilen Gruppen der eingesetzten Poly(meth-)acrylate erfolgen. Bevorzugt erfolgt die Herstellung in der Schmelze bei Temperaturen ≥ 160 °C und Drücken ≤ 10 mbar, vorzugsweise bei 170 - 210 °C und Drücken ≤ 5 mbar und ganz besonders bevorzugt bei 170 - 190 °C und Drücken ≤ 3 mbar, unter Zugabe eines Katalysators.

Als Lacton für die Pfropfungsreaktion kann grundsätzlich jedes Lacton eingesetzt werden, beispielsweise γ-Butyrolacton, γ-Valerolacton, δ-Valerolacton, Tetramethylencarbonat, 3-Oxa-ε-caprolacton, 1,4-Dioxan-2-on. Bevorzugt finden β-Propiolacton sowie β-Butyrolacton Einsatz, und besonders bevorzugt wird ε-caprolacton eingesetzt.

Beispiele für geeignete Katalysatoren sind Verbindungen, die auch in Polykondensationsreaktionen zur Synthese von Polyestern eingesetzt werden, oder deren Mischungen. Beispiele hierfür sind bevorzugt Metallverbindungen oder deren Mischungen, insbesondere auf Basis von Magnesium, Aluminium, Titan, Antimon, Bismut und Zinn, beispielsweise Butyltitanat und Antimon-III-actetat. Ganz besonders bevorzugt eignen sich zinnhaltige Katalysatoren, wie z. B. Monobutylzinnoxid, Butylzinn-tris-2-ethylhexanoat und Zinnoctoat.

In einer Ausführungsform des Verfahrens werden dem Reaktionsmedium Lösemittel zugesetzt, beispielsweise aromatische Kohlenwasserstoffe oder deren Gemische und/oder Ketone wie z. B. Cyclohexanon, Isobutylketon, Methylhexylketon, Methylheptylketon. In der besonders bevorzugten Ausführungsform des Verfahrens wird ohne Lösemittel gearbeitet. Dies ist vorteilhaft, da während der Vakuumphase der Reaktion kein Lösemittelabfall entsteht, der Reaktionsraum weitestgehend für das herzustellende Produkt genutzt werden kann und kein separater Aufarbeitungsschritt erforderlich ist. Das erfindungsgemäße Verfahren kann in Batch-Fahrweise oder kontinuierlich, z. B. in einem Extruder, durchgeführt werden. Wahlweise können die Poly(meth-)acrylat-pfropf-polylacton-Polymere ohne oder mit Fahrhilfsmitteln oder Additiven wie z. B. Antioxidantien ausgestattet werden.

Das erfindungsgemäße Poly(meth-)acrylat-pfropf-polylacton-Polymer gemäß Ansprüche 9 bis 11 weist den Gehalt an Monomeren mit nukleophilen Gruppen im Bereich von 0,1 bis 10 Gew.-% und vorzugsweise ein Gewichtsmittel des Molekulargewicht M_{w} von 2000 und 250000 g/mol, bevorzugt 7000 und 150000 g/mol und ganz besonders bevorzugt zwischen 12000 und 75000 g/mol auf.
Das Gewichtsmittel des Molekulargewichts M_{w} wird mittels Gelpermeationschromatographie mit RI-Detektion nach DIN 55672-1 mit Tetrahydrofuran als Eluent gegen Polystyrol-Standard bestimmt.

Ein weiterer Gegenstand der vorliegenden Erfindung sind Poly(meth-)acrylat-pfropf-polylacton-Polymere, erhältlich nach einem erfindungsgemäßen Verfahren.

Die mit dem erfindungsgemäßen Verfahren erhaltenen Poly(meth-)acrylat-pfropf-polylacton-Polymere weisen einen Polymolekularitätsindex (PMI) von ≤ 8 auf und haben eine Säurezahl von ≤ 5 mg KOH/g (bestimmt nach DIN EN ISO 2114), und zeichnen sich vorzugsweise durch eine monomodale Molmassenverteilung aus.

Als Polymolekularitätsindex wird das Verhältnis der mittleren Molekulargewichte M_{w}/Mₙ bezeichnet. In der vorliegenden Erfindung weisen die erfindungsgemäß erhaltenen Polymere einen PMI von ≤ 8, vorzugsweise ≤ 6 und insbesondere bevorzugt von ≤ 4 auf.

Die nach dem erfindungsgemäßen Verfahren erhaltenen Poly(meth-)acrylat-pfropf-polylacton-Polymere haben den Vorteil, dass sie annähernd frei von nicht umgesetztem Lacton sind. Vorzugsweise enthalten die erfindungsgemäßen Produkte kein nicht umgesetztes Lacton.

Für die erfindungsgemäßen Poly(meth-)acrylat-pfropf-polylacton-Polymere ergibt sich ein breites Anwendungsfeld. Die Auswahl der Anwendungsbeispiele ist nicht dazu geeignet die Verwendung der erfindungsgemäßen Polymere einzuschränken. Die Beispiele sollen einzig dazu dienen, stichprobenartig die breite Einsatzmöglichkeit der beschriebenen Polymere darzustellen. Beispielsweise werden die erfindungsgemäß synthetisierten Polymere in Heißklebemassen, Klebmassen, Dichtmassen, Heißsiegelmassen, für polymeranaloge Reaktionen oder zum Aufbau von Folgecopolymeren verwendet. Die Polymere können auch Verwendung finden in Formulierungen zur kosmetischen Anwendung, in Beschichtungsmaterialien, in Lacken, als Dispergiermittel, als Polymeradditiv oder in Verpackungen. Die Verwendung der erfindungsgemäßen Poly(meth-)acrylat-pfropf-polylacton-Polymere in den genannten Anwendungen ist ebenfalls Gegenstand der vorliegenden Erfindung.

Auch ohne weitere Ausführungen wird davon ausgegangen, dass ein Fachmann die obige Beschreibung im weitesten Umfang nutzen kann. Die bevorzugten

Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

Allgemeine Angaben zur Produktcharakterisierung:
Die in den folgenden Tabellen angegebenen Werte für den Polymolekularitätsindex PMI werden mittels Gelpermeationschromatographie bestimmt. Dabei gilt PMI = M_{w}/ Mₙ = massenmittleres Molekulargewicht / zahlenmittleres Molekulargewicht. Die gelpermeationschromatographische Charakterisierung aller Proben erfolgt in Tetrahydrofuran als Eluent nach DIN 55672-1. Mₙ (RI) = Zahlenmittleres Molekulargewicht (GPC, RI-Detektion), Angabe in g/mol M_{w} (RI) = Massenmittleres Molekulargewicht (GPC, RI-Detektion), Angabe in g/mol Mₚ (RI) = Molekulargewicht im Peakmaximum (GPC, RI-Detektion), Angabe in g/mol

Die Phasenübergangstemperaturen (z. B. Glasübergangstemperaturen T_{g}) werden mittels DSC nach DIN EN ISO 11357-1 gemessen und sind in °C angegeben. Die angegebenen Werte wurden dem zweiten Aufheizzyklus entnommen.

Die Hydroxylzahl (OH-Zahl), Angabe in mg KOH / g, wird bestimmt nach DIN 53240-2.

Die Säurezahl, Angabe in mg KOH / g, wird bestimmt nach DIN EN ISO 2114.

### Beispiel 1: Herstellung eines Poly(meth-)acrylat Präpolymeren

In einem Doppelmantelgefäß mit angeschlossenem Thermostaten, Rückflusskühler, Blattrührer und Innenthermometer werden 245 g Butylacetat, 120 g Methylmethacrylat und 2,5 g 2-Hydroxyethylmethacrylat vorgelegt. Die Mischung wird auf 105 °C erhitzt und anschließend mit 3,1 g n-Dodecylmercaptan (in 10 ml Butylacetat gelöst) versetzt. Die Initiierung erfolgt durch Zugabe von 3,7 g tert-Butylperbenzoat. Nach 20 minütigem Rühren wird eine Mischung aus 50 g Butylacetat, 8,2 g tert-Butylperbenzoat, 9,7 g n-Dodecylmercaptan, 361 g Methylmethacrylat und 7,5 g 2-Hydroxyethylmethacrylat über einen Zeitraum von vier Stunden zudosiert. Nach beendeter Dosierung wird für weitere 2 h bei 105 °C und anschließend 2 h bei 90 °C gerührt. Abschließend wird das Lösungsmittel destillativ entfernt. Das erhaltene Produkt hat die in Tabelle 1 aufgeführten Eigenschaften.

### Beispiel 2: Herstellung eines Poly(meth-)acrylat Präpolymeren

In einem Doppelmantelgefäß mit angeschlossenem Thermostaten, Rückflusskühler, Blattrührer und Innenthermometer werden 245 g Butylacetat, 114 g Methylmethacrylat und 8,6 g 2-Hydroxyethylmethacrylat vorgelegt. Die Mischung wird auf 105 °C erhitzt und anschließend mit 2,4 g n-Dodecylmercaptan (in 10 mL Butylacetat gelöst) versetzt. Die Initiierung erfolgt durch Zugabe von 3,0 g tert-Butylperbenzoat. Nach 20 minütigem Rühren wird eine Mischung aus 50 g Butylacetat, 6,6 g tert-Butylperbenzoat, 7,3 g n-Dodecylmercaptan, 343 g Methylmethacrylat und 25,8 g 2-Hydroxyethylmethacrylat über einen Zeitraum von vier Stunden zudosiert. Nach beendeter Dosierung wird für weitere 2 h bei 105 °C und anschließend 2 h bei 90 °C gerührt. Abschließend wird das Lösungsmittel destillativ entfernt. Das erhaltene Produkt hat die in Tabelle 1 aufgeführten Eigenschaften.

**Tabelle 1**

| **Beispiel Nr.** | **OH-Zahl** | **Säurezahl** | **Mₙ** | **M_{W}** | **Mₚ** | **PMI** | **T_{g}** |
|---|---|---|---|---|---|---|---|
| **1** | 20 | 1,9 | 4800 | 12200 | 11800 | 2,54 | 91 |
| **2** | 28 | 1,8 | 7800 | 18700 | 17400 | 2,40 | 100 |
| | | | | | | | |

### Beispiel 3: Herstellung eines erfindungsgemäßen Poly(meth-)acrylat-pfropf-polylacton-Polymeren

In einem 1000 ml Dreihalskolben mit Destillationsbrücke werden unter Schutzgasatmosphäre 250 g ε-caprolacton vorgelegt und auf 50 °C erhitzt. Dann werden 250 g des Präpolymers aus Beispiel 1 während weiterem Aufheizen auf 170 °C zugegeben. Nach beendeter Zugabe werden 0.05 g Butylzinn-tris-2-ethylhexanoat zugegeben und bei gleicher Temperatur noch 2 h gerührt. Anschließend wird Vakuum angelegt (< 3 mbar). Nach 3 h wird ein farbloses Produkt erhalten. Die Kennzahlen sind Tabelle 2 zu entnehmen.

### Beispiel 4: Herstellung eines erfindungsgemäßen Poly(meth-)acrylat-pfropf-polylacton-Polymeren

In einem 1000 ml Dreihalskolben mit Destillationsbrücke werden unter Schutzgasatmosphäre 250 g ε-caprolacton vorgelegt und auf 50 °C erhitzt. Dann werden 250 g des Präpolymers aus Beispiel 2 während weiterem Aufheizen auf 180 °C zugegeben. Nach beendeter Zugabe werden bei dieser Temperatur 0.05 g Butylzinn-tris-2-ethylhexanoat zugegeben und es wird noch 3 h gerührt. Anschließend wird Vakuum (< 3 mbar) angelegt. Nach 3 h wird ein farbloses Produkt erhalten. Die Kennzahlen sind Tabelle 2 zu entnehmen.

### Vergleichsbeispiel V1: Umsetzung eines Poly(meth)acrylates mit ε-Caprolacton

In einem 1000 ml Dreihalskolben mit Destillationsbrücke werden unter Schutzgasatmosphäre 300 g ε-caprolacton vorgelegt und auf 50 °C erhitzt. Dann werden 300 g des Präpolymers aus Beispiel 1 während weiterem Aufheizen auf 150 °C zugegeben. Nach beendeter Zugabe wird noch 2 h gerührt. Anschließend werden bei dieser Temperatur 0.06 g Butylzinn-tris-2-ethylhexanoat zugegeben und Vakuum (< 3 mbar) angelegt. Nach 3 h wird ein farbloses Produkt erhalten. Die Kennzahlen sind Tabelle 2 zu entnehmen.

### Vergleichsbeispiel V2: Umsetzung eines Poly(meth)acrylates mit ε-Caprolacton

In einem 1000 ml Dreihalskolben mit Destillationsbrücke werden unter Schutzgasatmosphäre 150 g ε-caprolacton vorgelegt und auf 50 °C erhitzt. Dann werden 450 g des Präpolymers aus Beispiel 2 während weiterem Aufheizen auf 150 °C zugegeben. Nach beendeter Zugabe werden bei dieser Temperatur 0.06 g Butylzinn-tris-2-ethylhexanoat zugegeben und noch 2 h gerührt. Anschließend und der Druck auf 15 mbar reduziert. Nach 3 h wird ein trübes Produkt erhalten. Die Kennzahlen sind Tabelle 2 zu entnehmen.

| **Beispiel Nr.** | **OH-Zahl** | **Säurezahl** | **Mₙ** | **M_{w}** | **Mₚ** | **PMI** | **T_{g}** | **Rest-ε-Caprolacton** ¹ |
|---|---|---|---|---|---|---|---|---|
| **3** | 13 | 2,8 | 6.400 | 18.300 | 17.100 | 2,86 | -38 °C | n.n. |
| **4** | 12 | 1,1 | 9.600 | 56.400 | 45.300 | 5,88 | -39 °C | n.n. |
| | | | | | | | | |
| | | | | | | | | |
| **V1** | 23 | 8,6 | 5.100 | 12.300 | 13.600/2.800 | 2,41 | -40 °C | 1,00 |
| **V2** | 31 | 8,7 | 2.200 | 20.300 | 21.300/1.600 | 9,23 | n.n. | 3,40 |

| | | | | | | | | |
|---|---|---|---|---|---|---|---|---|
| ¹ Graphisch aus dem Diagramm der Gelpermeationschromatographie ermittelt, in Flächenprozent n. n. = nicht nachweisbar | | | | | | | | |

## Patentansprüche

1. Verfahren zur Herstellung von Poly(meth-)acrylat-pfropf-polylacton-Polymeren umfassend die ringöffnende Polymerisation von Lactonen auf Poly(meth)-acrylate mit nukleophilen Gruppen bei Temperaturen ≥ 160 °C und Drücken ≤ 10 mbar unter Zusatz eines Katalysators.

2. Verfahren gemäß Anspruch 1, **dadurch gekennzeichnet, dass** die Poly(meth)acrylate mindestens teilweise auf Monomeren, die nukleophile Gruppen tragen, basieren.

3. Verfahren gemäß Anspruch 1 oder 2, **dadurch gekennzeichnet, dass** die nukleophilen Gruppen ausgewählt sind aus der Gruppe umfassend Hydroxylgruppen, Säuregruppen, Aminogruppen und/oder Mercaptogruppen.

4. Verfahren gemäß einem oder mehreren der Ansprüche 1 bis 3, **dadurch gekennzeichnet, dass** der Gehalt an Monomeren mit nukleophilen Gruppen im Bereich von 0,1 bis 10 Gew.-% liegt, bezogen auf den Poly(meth)acrylatanteil im Polyesteracrylatpfropfcopolymeren.

5. Verfahren gemäß einem oder mehreren der Ansprüche 1 bis 4, **dadurch gekennzeichnet, dass** die nukleophilen Gruppen Hydroxylgruppen sind.

6. Verfahren gemäß einem oder mehreren der Ansprüche 1 bis 5, **dadurch gekennzeichnet, dass** als Lacton ε-caprolacton eingesetzt wird.

7. Verfahren gemäß einem oder mehreren der Ansprüche 1 bis 6, **dadurch gekennzeichnet, dass** als Katalysatoren Metallverbindungen eingesetzt werden.

8. Verfahren gemäß einem oder mehreren der Ansprüche 1 bis 7, **dadurch gekennzeichnet, dass** die ringöffnende Polymerisation in Lösung oder in der Schmelze erfolgt.

9. Poly(meth-)acrylat-pfropf-polylacton-Polymere, erhalten durch ringöffnende Polymerisation von Lactonen auf Poly(meth)-acrylate mit nukleophilen Gruppen bei Temperaturen ≥ 160 °C und Drücken ≤ 10 mbar unter Zusatz eines Katalysators, **dadurch gekennzeichnet, dass** der Gehalt an Monomeren mit nukleophilen Gruppen im Bereich von 0,1 bis 10 Gew.-% liegt, bezogen auf den Poly(meth)acrylatanteil im Poly(meth-)acrylat-pfropf-polylacton-Polymeren.

10. Poly(meth-)acrylat-pfropf-polylacton-Polymere gemäß Anspruch 9, **dadurch gekennzeichnet, dass** sie einen PMI von ≤ 8 aufweisen, bestimmt mittels Gelpermeationschromatographie mit RI-Detektion nach DIN 55672-1 mit Tetrahydrofuran als Eluent gegen Polystyrol-Standard.

11. Poly(meth-)acrylat-pfropf-polylacton-Polymere gemäß Anspruch 9 oder 10, **dadurch gekennzeichnet, dass** sie eine Säurezahl von ≤ 5 mg KOH/g, bestimmt nach DIN EN ISO 2114, aufweisen.

12. Verwendung der Poly(meth-)acrylat-pfropf-polylacton-Polymere gemäß einem oder mehreren der Ansprüche 9 bis 11 in Heißklebemassen, Klebmassen, Dichtmassen, Heißsiegelmassen, für polymeranaloge Reaktionen oder zum Aufbau von Folgecopolymeren, in Formulierungen zur kosmetischen Anwendung, in Beschichtungsmaterialien, in Lacken, als Dispergiermittel, als Polymeradditiv oder in Verpackungen.

## Claims

1. Process for preparing poly(meth)acrylate-graft-polylactone polymers, comprising the ring-opening polymerization of lactones onto poly(meth)acrylates with nucleophilic groups at temperatures ≥_160°C and pressures ≤ 10 mbar, with addition of a catalyst.

2. Process according to claim 1, **characterized in that** the poly(meth)acrylates are based at least partly on monomers which carry nucleophilic groups.

3. Process according to claim 1 or 2, **characterized in that** the nucleophilic groups are selected from the group encompassing hydroxyl groups, acid groups, amino groups and/or mercapto groups.

4. Process according to one or more of claims 1 to 3, **characterized in that** the amount of monomers having nucleophilic groups is in the range from 0.1% to 10% by weight, based on the poly(meth)acrylate fraction in the polyesteracrylate graft copolymer.

5. Process according to one or more of claims 1 to 4, **characterized in that** the nucleophilic groups are hydroxyl groups.

6. Process according to one or more of claims 1 to 5, **characterized in that** ε-caprolactone is used as lactone.

7. Process according to one or more of claims 1 to 6, **characterized in that** metal compounds are used as catalysts.

8. Process according to one or more of claims 1 to 7, **characterized in that** the ring-opening polymerization takes place in solution or in the melt.

9. Poly(meth)acrylate-graft-polylactone polymers obtained by ring-opening polymerization of lactones onto poly(meth)acrylates with nucleophilic groups at temperatures ≥ 160°C and pressures ≤ 10 mbar, with addition of a catalyst, **characterized in that** the amount of monomers having nucleophilic groups is in the range from 0.1% to 10% by weight, based on the poly(meth)acrylate fraction in the poly(meth)acrylate-graft-polylactone polymer.

10. Poly(meth)acrylate-graft-polylactone polymers according to claim 9, **characterized in that** they have a PDI of ≤ 8, determined by means of gel permeation chromatography with RI detection in accordance with DIN 55672-1 with tetrahydrofuran as eluent against a polystyrene standard.

11. Poly(meth)acrylate-graft-polylactone polymers according to claim 9 or 10, **characterized in that** they have an acid number of ≤ 5 mg KOH/g, determined in accordance with DIN EN ISO 2114.

12. Use of the poly(meth)acrylate-graft-polylactone polymers according to one or more of claims 9 to 11 in hotmelt adhesives, other adhesives, sealants, heat-sealing compositions, for polymer-analogous reactions or for the synthesis of subsequent copolymers, in formulations for cosmetic application, in coating materials, in paints, as dispersants, as a polymer additive or in packaging.

## Revendications

1. Procédé de fabrication de polymères polylactones greffées poly(méth)acrylates, comprenant la polymérisation par ouverture de cycle de lactones sur des poly(méth)acrylates avec des groupes nucléophiles à des températures 160°C et des pressions ≤ 10 mbar avec ajout d'un catalyseur.

2. Procédé selon la revendication 1, **caractérisé en ce que** les poly(méth)acrylates sont à base, au moins en partie, de monomères qui portent des groupes nucléophiles.

3. Procédé selon la revendication 1 ou 2, **caractérisé en ce que** les groupes nucléophiles sont choisis dans le groupe comprenant des groupes hydroxyles, acides, amino et/ou mercapto.

4. Procédé selon une ou plusieurs des revendications 1 à 3, **caractérisé en ce que** la teneur en monomères à groupes nucléophiles se situe entre 0,1 et 10 % en poids rapporté à la teneur totale en poly(méth)acrylates dans le copolymère greffé polyesteracrylate.

5. Procédé selon une ou plusieurs des revendications 1 à 4, **caractérisé en ce que** les groupes nucléophiles sont des groupes hydroxyles.

6. Procédé selon une ou plusieurs des revendications 1 à 5, **caractérisé en ce qu'**on utilise comme lactone l'ε-caprolactone.

7. Procédé selon une ou plusieurs des revendications 1 à 6, **caractérisé en ce qu'**on utilise comme catalyseurs des composés métalliques.

8. Procédé selon une ou plusieurs des revendications 1 à 7, **caractérisé en ce que** la polymérisation par ouverture de cycle se fait en solution ou dans la masse.

9. Polymères polylactones greffées poly(méth)acrylates obtenus par polymérisation par ouverture de cycle de lactones sur des poly(méth)acrylates avec des groupes nucléophiles à des températures ≥ 160°C et des pressions ≤ 10 mbar avec ajout d'un catalyseur, **caractérisés en ce que** la teneur en monomères à groupes nucléophiles se situe entre 0,1 et 10 % en poids rapporté à la teneur totale en poly(méth)acrylates dans le copolymère polylactone greffée poly(méth)acrylate.

10. Polymères polylactones greffées poly(méth)acrylates selon la revendication 9, **caractérisés en ce qu'**ils présentent une PMI ≤ 8 déterminée par chromatographie à perméation de gel avec détection IR selon la norme DIN 55672-1 avec éluant tétrahydrofurane et un standard polystyrène.

11. Polymères polylactones greffées poly(méth)acrylates selon la revendication 9 ou 10, **caractérisés en ce qu'**ils présentent un indice d'acide ≤ 5 mg KOH/g déterminé selon la norme DIN EN ISO 2114.

12. Utilisation de polymères polylactones greffées poly(méth)acrylates selon l'une ou plusieurs des revendications 9 à 11 dans des compositions adhésives à chaud, des compositions adhésives, des joints d'étanchéité, des compositions d'étanchéité à chaud, pour des modifications chimiques de polymères ou pour la synthèse de copolymères consécutifs, dans des formulations à usage cosmétique, dans des matériaux de recouvrement, dans des vernis, comme agent dispersant, comme additif polymère ou dans des emballages.
